# EUROPEAN PATENT SPECIFICATION

(11) **EP 4 577 506 B1**
(45) Date of publication and mention of the grant of the patent: **10.06.2026**
(21) Application number: 23761067.0
(22) Date of filing: 16.08.2023
(51) Int. Cl.: C04B 35/043, C04B 35/63, C04B 35/632, C04B 35/66, C04B 28/00

(54) **UNSHAPED REFRACTORY MATERIAL, METHOD OF PRODUCING A MOIST UNSHAPED REFRACTORY MATERIAL AND METHOD OF MAKING A REFRACTORY LINING**
UNGEFORMTES FEUERFESTES MATERIAL, VERFAHREN ZUM PRODUZIEREN EINES FEUCHTEN UNGEFORMTEN FEUERFESTEN MATERIALS UND VERFAHREN ZUR HERSTELLUNG EINER FEUERFESTEN AUSKLEIDUNG
MATÉRIAU RÉFRACTAIRE NON FORMÉ, PROCÉDÉ DE PRODUCTION D'UN MATÉRIAU RÉFRACTAIRE NON FORMÉ HUMIDE ET PROCÉDÉ DE FABRICATION D'UN GARNISSAGE RÉFRACTAIRE

(30) Priority: 26.08.2022 EP 22192379
(43) Date of publication of application: 02.07.2025
(73) Proprietor: Refractory Intellectual Property GmbH & Co. KG, 1100 Wien (AT)
(72) Inventor: EDER, Stefan, 8010 Graz (AT); WAPPEL, David, 8700 Leoben (AT); FREILER, Michael, 2851 Krumbach (AT)
(74) Representative: Berkenbrink, Kai-Oliver
(86) International application number: PCT/EP2023/072578
(87) International publication number: WO 2024/041952

(56) References cited:
- CN-A- 101 407 423
- US-A- 3 879 208
- US-A- 4 778 526

## Description

The invention relates to an unshaped refractory material, a method of producing a moist unshaped refractory material and a method of making a refractory lining.

Refractory materials are materials that can withstand high temperatures. The term "refractory material" in the sense of the invention refers in particular to refractory materials with an operating temperature above 600°C and preferably to refractory materials in accordance with DIN 51060:2000-06, i.e., materials with a pyrometric cone equivalent > SK17. The pyrometric cone equivalent can be determined in particular in accordance with DIN EN 993-12:1997-06.

An "unshaped" refractory material refers to a refractory material that does not have a defined shape, that is, that has not been given a defined shape by any shaping process like pressing. Rather, an unshaped refractory material may be, for example, in bulk or some other unshaped form. In particular, an unshaped refractory material refers to a material what is also called a "refractory mass" or "refractory mix". As is well known, unshaped refractory material in the form of a refractory mass is introduced at its place of use unshaped and is only hardened, dried and heated there. In particular, linings for high temperature aggregates can be used in the form of such a refractory mass.

A typical application of unshaped refractory materials is their use for the lining of high-temperature aggregates in steel production. For example, in one of the final steps of the steelmaking process, molten steel is casted from a tundish into cooled moulds. In order to ensure a continuous casting process and to protect the permanent lining of the tundish from corrosion and erosion, the tundish is commonly lined with an unshaped refractory material (as so called "wear lining mix"). Before casting starts, the wear lining mix must generally be preheated to around 1,000 to 1,200°C to prevent the molten steel from solidifying in the tundish at the start of the casting process. When a temperature in the aforementioned temperature range of about 1,000 to 1,200°C is reached, the unshaped refractory material begins to sinter, thereby forming a ceramic bond and thus acquiring permanent strength during the casting process. The most common wear lining mixes for lining a tundish are so-called "slurry gunning mixes". However, these types of mixes have a relatively high water content. Before preheating the slurry gunning mixes, they therefore have to be dried in a comparatively long and energy-intensive drying process. Alternatively, so-called "cold setting mixes" are also known as wear lining mixes for lining a tundish, which have a lower water content and do not have to undergo a separate drying process before preheating. Such cold setting mixes harden by means of organic compounds in the cold state. However, in the case of cold setting mixes, preheating leads to decomposition of the organic components in the mix and thus to a loss of strength of the cold setting mixes in a temperature range of about 600 to 1,000°C, i.e., before a ceramic bond is formed. This loss of strength can lead to damage or even destruction of the refractory lining based on such cold setting mixes. US 4 778 526 A and US 3 879 208 A describe unshaped magnesia base refractories comprising citric acid and aluminium sulphate.

It is an object of the invention to provide an unshaped refractory material which already hardens by only a small addition of water in the cold state, and at the same time provides a stable bonding until the maximum preheating temperature is reached. In particular, the unshaped refractory material shall show a stable bonding until reaching a temperature at which the unshaped refractory material starts to sinter. In particular, a stable bonding shall mean that the unshaped refractory material is not substantially damaged or even destroyed.

In particular, the unshaped refractory material shall allow to provide a stable bonding in a temperature range from ambient temperature to a temperature in the range of about 1,000 to 1,200°C.

To solve this object, according to the invention, there is provided an unshaped refractory material comprising:
a refractory base component; and
a binder component; wherein the binder component comprises,
   citric acid; and
   aluminum sulfate; and wherein
the refractory base component is present as a bulk of grains, wherein
the grains comprise a fine fraction of grains having a grain size below 0.063 mm, wherein
the fine fraction is present in a proportion in the range of 3 to 30% by mass, based on the total mass of the refractory base component, and wherein
the fine fraction comprises CaO in a proportion in the range of 1.5 to 10% by mass, based on the total mass of the fine fraction.

Surprisingly, it has been found according to the invention that such an unshaped refractory material can provide a material which forms a stable bond by only a very small addition of water in a temperature range from ambient temperature to the sintering temperature of the material. In particular, a stable bond can be provided by only a very small addition of water in a temperature range from ambient temperature until a temperature in the range of 1,000 to 1,200°C. In particular, this bond is stable in this temperature interval to such an extent that a wear lining mix of a tundish, made from the unshaped refractory material according to the invention, does not undergo any significant damage in the temperature interval from ambient temperature until the maximum preheating temperature in the range from about 1,000 to 1,200°C is reached.

In particular, it has been found according to the invention that such a stable bond of the unshaped refractory material according to the invention can already be achieved by adding only 1.0 to 1.9% by mass of water, based on the mass of the unshaped refractory material without the water.

A significant finding according to the invention is that this stable bond can be achieved by combining the binders with the fine fraction of the refractory base component according to the invention.

The refractory base component is present as a bulk of grains, i.e., in the form of a bulk material. This bulk of grains comprises a fine fraction of grains with a grain size below 0.063 mm (63 µm). This fine fraction with a grain size below 0.063 mm is present in a proportion in the range of 3 to 30% by mass, based on the total mass of the refractory base component. In addition to the proportion of the fine fraction, it is also essential that the fine fraction contains CaO in a proportion in the range of 1.5 to 10% by mass, based on the total mass of the fine fraction.

According to the invention, it has been found that on the basis of the unshaped refractory material according to the invention, the bonding stability increases if the amount of the fine fraction approaches a range of 10-15 % by mass. Preferably, therefore, it may be provided that the fine fraction is present in a proportion of at least 3% by mass, more preferably of at least 7% by mass and even more preferably of at least 10% by mass, in each case based on the total mass of the refractory base component. Further, it may therefore be provided that the fine fraction is present in a proportion of at most 30% by mass, more preferably of at most 17% by mass and even more preferably of at most 15% by mass, in each case based on the total mass of the refractory base component. Further, it may therefore be provided that the fine fraction is present in a proportion in the range of 7 to 17% by mass and even more preferably in a proportion in the range of 10 to 15% by mass, in each case based on the total mass of the refractory base component.

With regard to the proportion of CaO in the fine fraction, according to the invention, it has been found that on the basis of the unshaped refractory material according to the invention, the bonding stability increases if the amount of CaO in the fine fraction approaches a range of 2 to 6% by mass. Preferably, therefore, it may be provided that the fine fraction comprises a proportion of CaO of at least 1.5% by mass and even more preferably of at least 2% by mass, in each case based on the total mass of the fine fraction. Further, it may therefore be provided that the fine fraction comprises a proportion of CaO in a proportion of at most 10% by mass, more preferably of at most 8% by mass and even more preferably of at most 6% by mass, in each case based on the total mass of the fine fraction. Further, it may therefore be provided that the fine fraction comprises a proportion of CaO in the range of 2 to 8% by mass and even more preferably in a proportion in the range of 2 to 6% by mass, in each case based on the total mass of the fine fraction.

The proportion of the fine fraction is preferably determined by means of a sieve analysis, particularly preferably in accordance with the standard ISO 1927-3:2012-12.

According to the invention, it has been found that the stable bond achievable by the unshaped refractory material according to the invention can be adversely affected by the presence of certain oxides in the fine fraction. Preferably, therefore, it may be provided that certain oxides, in particular Fe₂O₃, Al₂O₃ and SiO₂, are present in certain maximum proportions in the fine fraction. According to one embodiment it is provided that the fine fraction comprises the following oxides in the following proportions, each based on the total mass of the fine fraction:

| | |
|---|---|
| CaO: | 1.5 to 10% by mass; |
| Fe₂O₃: | below 6% by mass; |
| Al₂O₃: | below 3% by mass; |
| SiO₂: | below 7% by mass; |
| MgO: | balance to 100% by mass. |

The proportions of CaO in the fine fraction can further be present in the proportions as set forth above.

The above-mentioned proportions of oxides in the fine fraction are the chemical proportions of these oxides in the fine fraction. Therefore, the oxides need not be present in pure oxide form in the fine fraction. Preferably, the proportions of the oxides in the fine fraction are determined by X-ray fluorescence analysis (XRF), preferably by means of the standard ISO 12677:2011-10.

The binder component of the unshaped refractory material according to the invention comprises citric acid and aluminum sulfate.

According to a preferred embodiment, the citric acid is present as a powder.

According to a further preferred embodiment, the aluminum sulfate is present as a powder.

A particular advantage of the presence of citric acid and aluminum sulfate as powders is that these powders can be distributed very easily and uniformly over the entire volume of the unshaped refractory material according to the invention, in particular, for example, more easily than moist components. This uniform distribution of the binder components over the volume of the unshaped refractory material also results in particular in a very uniform stability of the material after addition of water. A further advantage of the presence of the binder components in the form of powder is, in particular, that an undesirable hardening of the material according to the invention may be avoided before water is added.

According to a preferred embodiment, the unshaped refractory material according to the invention comprises citric acid in a proportion in the range of 1.6 to 6% by mass, based on the total mass of the refractory base component and the binder component.

According to the invention, it has been found that a stable bond can be achieved by the unshaped refractory material according to the invention in particular when the citric acid is present in such a proportion. According to the invention, it was further found that a stable bond can still be improved and the handling of the material according to the invention is particularly easy when the amount of citric acid approaches a proportion of 2 to 3% by mass. It may therefore preferably be provided that the citric acid is present in a proportion of at least 1.6% by mass, more preferably in a proportion of at least 1.8% by mass and even more preferably in a proportion of at least 2% by mass, in each case based on the total mass of the refractory base component and the binder component. Furthermore, it may therefore be provided that the citric acid is present in a proportion of at most 6% by mass, more preferably at most 5% by mass, and even more preferably at most 3% by mass, each based on the total mass of refractory base component and the binder component. Further, it may therefore preferably be provided that the citric acid is present in a proportion in the range of 1.8 to 5% by mass and more preferably in a proportion in the range of 2 to 3% by mass, in each case based on the total mass of the refractory base component and the binder component.

According to a preferred embodiment, the aluminum sulfate is present in the form of hydrated aluminum sulfate. Preferably, the hydrated aluminum sulfate hydrate is in the form of Al₂(SO₄)₃ · x H₂O, with x in the range of 14 to 16.

According to a further preferred embodiment, the unshaped refractory material according to the invention comprises aluminum sulfate in a proportion in the range of 1 to 5% by mass, calculated as hydrated aluminum sulfate (Al₂(SO₄)₃ · 14 H₂O) and based on the total mass of the refractory base component and the binder component.

According to the invention, it has been found that a stable bond can be achieved by the unshaped refractory material according to the invention in particular when the aluminum sulfate is present in such a proportion. According to the invention, it was further found that a stable bond can still be improved and the handling of the material according to the invention is particularly easy when the amount of aluminum sulfate approaches a proportion of 2 to 3% by mass. It may therefore preferably be provided that the aluminum sulfate is present in a proportion of at least 1% by mass and even more preferably in a proportion of at least 2% by mass, in each case calculated as hydrated aluminum sulfate (Al₂(SO₄)₃ · 14 H₂O) and based on the total mass of the refractory base component and the binder component. Furthermore, it may therefore be provided that the aluminum sulfate is present in a proportion of at most 5% by mass, more preferably at most 4% by mass, and even more preferably at most 3% by mass, in each case calculated as hydrated aluminum sulfate (Al₂(SO₄)₃ · 14 H₂O) and based on the total mass of the refractory base component and the binder component. Further, it may therefore preferably be provided that the aluminum sulfate is present in a proportion in the range of 1 to 4% by mass and more preferably in a proportion in the range of 2 to 3% by mass, in each case calculated as hydrated aluminum sulfate (Al₂(SO₄)₃ · 14 H₂O) and based on the total mass of the refractory base component and the binder component.

As stated above, the binder components in the form of citric acid and aluminum sulfate may be present in very small proportions in the unshaped refractory material according to the invention. The advantage of such small proportions of binder is in particular also that early hydration and hardening of the material according to the invention can be avoided, whereby the unshaped refractory material according to the invention is particularly easy to handle, in particular easy to store and to transport.

The refractory base component constitutes the refractory raw material base of the unshaped refractory material according to the invention. Preferably, the refractory base component comprises one or more refractory raw materials.

Particularly preferably, the refractory base component is in the form of a basic refractory base component. As is known, basic refractory components consist of raw materials with the main oxide being MgO, e.g., raw materials in the form of magnesia, doloma or olivine. The refractory base component, in particular a basic refractory base component, therefore preferably comprises one or more basic refractory raw materials.

According to a preferred embodiment, the refractory base component comprises at least one of the following refractory raw materials: magnesia and olivine.

Particularly preferably, the refractory raw material in the form of magnesia is present as sintered magnesia.

According to a particularly preferred embodiment, the refractory base component comprises magnesia, in particular sintered magnesia.

According to a preferred embodiment, the unshaped refractory material comprises sintered magnesia in a proportion of at least 50% by mass, based on the total mass of the base component. Preferably, the unshaped refractory material comprises sintered magnesia in such a proportion in case the refractory base component is comprised of magnesia.

In case the refractory base component comprises the refractory raw materials magnesia and olivine, according to a preferred embodiment, the refractory base component comprises magnesia, in particular sintered magnesia, and olivine in the following mass proportions, in each case based on the total mass of the refractory base component: magnesia in the range of 10 to 90% by mass and olivine in the range of 90 to 10% by mass; more preferably magnesia in the range of 20 to 60% by mass and olivine in the range of 80 to 40% by mass; even more preferably magnesia in the range of 30 to 50% by mass and olivine in the range of 70 to 50 % by mass.

According to a preferred embodiment, the refractory base component comprises the following oxides in the following proportions, each based on the total mass of the refractory base component:

| | |
|---|---|
| CaO: | 0.5 to 20% by mass; |
| Fe₂O₃: | below 6% by mass; |
| Al₂O₃: | below 3% by mass; |
| SiO₂: | below 35% by mass; |
| MgO: | balance to 100% by mass. |

According to a further preferred embodiment, the refractory base component comprises the following oxides in the following proportions, each based on the total mass of the refractory base component:

| | |
|---|---|
| CaO: | 0.5 to 20% by mass; |
| Fe₂O₃: | below 6% by mass; |
| Al₂O₃: | below 3% by mass; |
| SiO₂: | 8 to 30% by mass; |
| MgO: | 60 to 80% by mass. |

The refractory base component may be comprised of the above oxides, in particular, in case the refractory base component is comprised of sintered magnesia and olivine.

According to a particularly preferred embodiment, the refractory base component comprises the following oxides in the following proportions, each based on the total mass of the refractory base component:

| | |
|---|---|
| CaO: | 0.5 to 20% by mass, preferably 2 to 6% by mass; |
| Fe₂O₃: | below 6% by mass; |
| Al₂O₃: | below 3% by mass; |
| SiO₂: | below 5.5% by mass; |
| MgO: | balance to 100% by mass. |

The refractory base component may be comprised of the above oxides, in particular, in case the refractory base component is comprised of sintered magnesia.

The above-mentioned proportions of oxides in the refractory base component are the chemical proportions of these oxides in the refractory base component. Therefore, the oxides need not be present in pure oxide form in the refractory base component. Preferably, the proportions of the oxides in the refractory base component are determined by X-ray fluorescence analysis (XRF), preferably by means of the standard ISO 12677:2011-10.

The oxidic composition of the entire refractory base component may differ from the oxidic composition of the fine fraction of the refractory base component. In particular, the proportion of CaO in the entire base refractory component may also differ from the proportion of CaO in the fine fraction of the refractory base component.

The unshaped refractory material according to the invention may comprise further components. For example, the unshaped refractory material may comprise at least one state of the art sintering aid, for example boric acid, for example in a proportion in the range of 0.1 to 1.0% by mass, based on the total mass of the refractory base component, the binder component and the at least one sintering aid.

A further subject-matter of the invention is a method of producing a moist unshaped refractory material, comprising the following steps:
providing an unshaped refractory material in accordance with the present invention;
adding water to the unshaped refractory material.

The addition of water to the unshaped refractory material according to the invention causes a reaction in the unshaped refractory material which leads to a bonding of the material.

In this respect, it is also particularly advantageous that the two binder components citric acid and aluminum sulfate are characterized by a high solubility in water, which is why the bonding reaction is initiated by the addition of water. This creates an acidic solution in the unshaped refractory material, which is capable of dissolving cations, especially calcium cations, of the refractory base component, thereby increasing the pH of the solution and precipitating a three-dimensional bonding phase matrix with different citrate-sulfate phases. This achieves a stable bond already at ambient temperature. The inventors assume that this very stable bonding phase matrix based on the refractory material according to the invention is enhanced in particular by the fact that cations, in particular calcium cations and possibly also magnesium cations, from the fine fraction of the refractory base component dissolve very easily, as a result of which the pH value increases rapidly and strongly and the formation of the bonding phase is thereby enhanced. However, the reason for this very rapid and strong formation of a binding phase matrix in the material according to the invention is currently the subject of further research. During subsequent heat treatment of the unshaped refractory material mixed with water, in particular, for example, during preheating of the material in a tundish, the organic binder components, in particular citric acid, can be decomposed at temperatures up to about 600°C. However, an advantage of the material according to the invention is that a binder structure consisting of sulfate-containing phases is retained up to a temperature of at least about 1,000 to 1,200°C. This means that a stable bond of the unshaped refractory material can also be maintained in this temperature range of about 600°C to about 1,000/1,200°C.

Preferably, it is provided, when carrying out the process according to the invention, that water in a proportion in the range of 1.0 to 1.9% by mass, based on the total mass of refractory base component and the binder component of the unshaped refractory material without the water, is added to the unshaped refractory material.

According to the invention, it was found that the stable bonding and handling of the unshaped refractory material mixed with water can be further increased by approaching the added water content to a proportion in the range of 1.2 to 1.8% by mass. According to a particularly preferred embodiment, it is therefore provided that water in a proportion in the range of 1.2 to 1.8% by mass, based on the total mass of refractory base component and the binder component of the unshaped refractory material without the water, is added to the unshaped refractory material.

A further subject-matter of the invention is a moist unshaped refractory material prepared in accordance with the method according to the invention.

After adding water to the unshaped refractory material according to the invention, the moist unshaped refractory material can be used, in particular, in the manner of an unshaped refractory material, i.e., in the manner of a so-called refractory mass. In particular, the moist unshaped refractory material may be used for lining a tundish.

A further subject-matter of the invention is the provision of the unshaped refractory material according to the invention, further comprising water.

Preferably, as set forth above, the unshaped refractory material comprises water in a proportion in the range of 1.0 to 1.9% by mass and even more preferably in a proportion in the range of 1.2 to 1.8% by mass, in each case based on the total mass of the refractory base component and the binder component without the water.

A further subject-matter of the invention is the use of the unshaped refractory material according to the invention, in particular to the extent that the unshaped refractory material further comprises water, for lining a surface. This use may in particular be with the proviso that the surface is the surface of a vessel for holding molten steel, in particular, the surface of a tundish.

A further subject-matter of the invention is a method of making a refractory lining, comprising the following steps:
providing an unshaped refractory material further comprising water, according to the invention;
applying the unshaped refractory material comprising water to a surface.

The surface may in particular be the surface of a vessel for holding a molten steel, in particular the surface of a tundish.

Further features of the invention are apparent from the claims and the examples of embodiments of the invention described below. All features of the invention may, individually or in combination, be combined with each other in any desired manner.

Exemplary embodiments of the invention and a Comparative Example are explained in more detail below.

### Exemplary embodiment

According to a first embodiment, an unshaped refractory material according to the invention was provided, which had the following components according to Table 1:

**Table 1**

| **Component** | **Mass fraction [% by mass]** |
|---|---|
| Sintered magnesia ≤ 2.36 mm | 94.5 |
| Aluminum sulfate | 2.5 |
| Citric acid | 2.5 |
| Boric acid | 0.5 |

The mass fractions according to Table 1 are in each case related to the total of all components of the unshaped refractory material according to Table 1.

The sintered magnesia represented the basic refractory component of the unshaped refractory material. Due to its composition based on sintered magnesia, this refractory base component represented a basic refractory base component.

The aluminum sulfate and citric acid were each in powder form. The aluminum sulfate was present as aluminum sulfate hydrate in the form of Al₂(SO₄)₃ · 14 H₂O. The mass fraction of aluminum sulfate in the material shown in Table 1 is calculated on the basis of such aluminum sulfate hydrate.

The sintered magnesia in the unshaped refractory material according to Table 1 had the chemical composition according to Table 2:

**Table 2**

| **Oxide** | **Mass fraction [% by mass]** |
|---|---|
| MgO | 93.1 |
| Al₂O₃ | 0.4 |
| SiO₂ | 3.1 |
| CaO | 2.7 |
| Fe₂O₃ | 0.6 |
| Others | 0.1 |

The mass fractions according to Table 2 are in each case related to the total mass of the sintered magnesia.

The mass fractions of oxides were determined by X-ray fluorescence analysis in accordance with ISO 12677:2011-10. All other oxide data given below were also determined by means of this standard.

The sintered magnesia according to Table 1 had a fine fraction with a grain size below 0.063 mm in a proportion of 11.5% by mass, based on the total mass of the sintered magnesia. The proportion of the fine fraction was determined by sieve analysis according to ISO 1927-3:2012-12.

The fine fraction of the sintered magnesia had the chemical composition according to Table 3:

**Table 3**

| **Oxide** | **Mass fraction [% by mass]** |
|---|---|
| MgO | 93.4 |
| Al₂O₃ | 0.1 |
| SiO₂ | 2.9 |
| CaO | 3.1 |
| Fe₂O₃ | 0.5 |

The unshaped refractory material composed as above was mixed with 1.5% by mass of water, based on the total mass of the material without the water, and mixed, thus obtaining an embodiment of a moist unshaped refractory material according to the invention.

In order to be able to determine the strength of this moist unshaped refractory material, cylindrical test specimens of the material were prepared by filling and drawing off a cup. These test specimens were then allowed to harden for 45 minutes.

After 45 minutes, the condition of the test specimens was checked for dimensional stability and strength. Thereafter, all of the test specimens were found to be fully hardened. The test specimens could not be damaged by hand. The edges of the specimens were stable and resistant to abrasion.

Finally, the cold crushing strength (CCS) according to DIN EN ISO 1927-6:2013-04 of the test specimens was investigated when heated in a temperature range from ambient temperature to 1,200°C. The results of this series of tests are shown in Table 4:

**Table 4**

| **Temperature [°C]** | **CCS [N/mm²]** |
|---|---|
| 25 | 6.55 |
| 110 | 10.85 |
| 250 | 12.75 |
| 400 | 5.45 |
| 600 | 4.70 |
| 800 | 3.30 |
| 900 | 3.50 |
| 1,000 | 3.50 |
| 1,200 | 6.75 |

In particular, a stable bond can be provided by only a very small addition of water in a temperature range from ambient temperature until a temperature in the range of 1,000 to 1,200°C.

The test results clearly show that, despite the low water content of only 1.5%, a stable bond, as reflected by the CCS values, could be provided over the whole temperature range from ambient temperature (25°C) to 1,200°C.

### Comparative example

For comparative purposes, another unshaped refractory material was provided which was not an embodiment of the invention (Comparative example). In this respect, the unshaped refractory material according to the Comparative Example had a composition according to Table 1. However, the sintered magnesia had a different chemical composition than compared to the sintered magnesia according to Table 2, namely the following chemical composition according to Table 5:

**Table 5**

| **Oxide** | **Mass fraction [% by mass]** |
|---|---|
| MgO | 94.6 |
| Al₂O₃ | 0.3 |
| SiO₂ | 1.3 |
| CaO | 0.5 |
| Fe₂O₃ | 2.3 |
| Others | 1.0 |

In the Comparative example, the sintered magnesia had a fine fraction with a grain size below 0.063 mm in a proportion of 10.9% by mass, based on the total mass of the sintered magnesia. The chemical composition of the fine fraction was also different compared with the exemplary embodiment of the invention. Insofar, the fine fraction had the chemical composition according to Table 6:

**Table 6**

| **Oxide** | **Mass fraction [% by mass]** |
|---|---|
| MgO | 94.4 |
| Al₂O₃ | 0.8 |
| SiO₂ | 1.1 |
| CaO | 0.5 |
| Fe₂O₃ | 2.4 |
| Others | 0.9 |

The unshaped refractory material according to this Comparative example was mixed with 1.5% by mass of water, treated and shaped into test specimens in the same manner as the above exemplary embodiment of the invention. Also, in the same way as the exemplary embodiment of the invention, dimensional stability and strength were then checked after 45 minutes. It was then found that the test specimens exhibited some dimensional stability, but no strength at all. On the contrary, the test specimens proved to be so loose that they completely disintegrated even when lightly touched by a finger.

Due to this practically non-existent stability already at ambient temperature, the unshaped refractory material according to the Comparative example thus proves to be unsuitable for any technical application. This also applies in particular to the application of this material in e.g., a tundish, as a certain stability at room temperature is required to keep, i.e., stick, the material at the sidewall of the tundish. If the material does not stick to the sidewall of the tundish, heating it up to higher temperatures is technically not useful. Furthermore, it must be assumed that the stability decreases even further at elevated temperatures.

### Further exemplary embodiments

Several exemplary embodiments of unshaped refractory materials according to the invention were prepared to determine their strength development at room temperature. These materials had essentially the same composition as the exemplary embodiment described above, with only the binder amount, i.e., the amount of aluminum sulfate and citric acid in the material being varied. A total of five embodiments of such materials were prepared, designated 01 through 04 in Table 7:

**Table 7**

| **Component** | **Sample** | | | |
|---|---|---|---|---|
| | **01** | **02** | **03** | **04** |
| | **Mass fraction [% by mass]** | | | |
| Sintered magnesia ≤ 2.36 mm | 97.50 | 96.40 | 96.00 | 94.50 |
| Aluminum sulfate | 1.50 | 2.50 | 2.50 | 2.50 |
| Citric acid | 0.50 | 0.60 | 1.00 | 2.50 |
| Boric acid | 0.50 | 0.50 | 0.5 | 0.50 |
| Water | 1.50 | 1.50 | 1.50 | 1.50 |
| Result | 3 | 3 | 2 | 1 |

The result of the tests on dimensional stability and strength is given in the last row under "Result". The respective numbers stand for the following test results:
3: Test specimen were found to have a rough surface and loose grains. Slight deformation of the specimen was possible by means of light finger contact.
2: Test specimens show good strength. Deformation and destruction of the specimens is only possible with higher pressure. Abrasion of the specimen edges by hand is possible.
1: Test specimens were found to be fully hardened. The test specimens could not be damaged by hand. The edges of the specimens were stable and resistant to abrasion.

This showed that the best results in terms of dimensional stability and strength were observed when aluminum sulfate and citric acid were each present in a proportion of 2.5% by mass.

## Claims

1. An unshaped refractory material comprising:
1.1 a refractory base component; and
1.2 a binder component; wherein the binder component comprises,
1.2.1 citric acid; and
1.2.2 aluminum sulfate; and wherein
1.3 the refractory base component is present as a bulk of grains, wherein
1.3.1 the grains comprise a fine fraction of grains having a grain size below 0.063 mm, wherein
1.3.1.1 the fine fraction is present in a proportion in the range of 3 to 30% by mass, based on the total mass of the refractory base component, and wherein
1.3.1.2 the fine fraction comprises CaO in a proportion in the range of 1.5 to 10% by mass, based on the total mass of the fine fraction.

2. The unshaped refractory material according to claim 1, comprising citric acid in a proportion in the range of 1.6 to 6% by mass, based on the total mass of the refractory base component and the binder component.

3. The unshaped refractory material according to at least one of the preceding claims, wherein the citric acid is present as a powder.

4. The unshaped refractory material according to at least one of the preceding claims, wherein the aluminum sulfate is present in the form of hydrated aluminum sulfate.

5. The unshaped refractory material according to at least one of the preceding claims, comprising aluminum sulfate in a proportion in the range of 1 to 5% by mass, calculated as hydrated aluminum sulfate (Al₂(SO₄)₃ · 14 H₂O) and based on the total mass of the refractory base component and the binder component.

6. The unshaped refractory material according to at least one of the preceding claims, wherein the aluminum sulfate is present as a powder.

7. The unshaped refractory material according to at least one of the preceding claims, wherein the fine fraction comprises the following oxides in the following proportions, each based on the total mass of the fine fraction:
| | |
|---|---|
| CaO: | 1.5 to 10% by mass; |
| Fe₂O₃: | below 6% by mass; |
| Al₂O₃: | below 3% by mass; |
| SiO₂: | below 7% by mass; |
| MgO: | balance to 100% by mass. |

8. The unshaped refractory material according to at least one of the preceding claims, wherein the refractory base component comprises at least one of the following refractory raw materials: magnesia and olivine.

9. The unshaped refractory material according to claim 8, comprising magnesia in a proportion of at least 50% by mass, based on the total mass of the base component.

10. The unshaped refractory material according to at least one of the preceding claims, wherein the refractory base component comprises the following oxides in the following proportions, each based on the total mass of the refractory base component:
| | |
|---|---|
| CaO: | 0.5 to 20% by mass; |
| Fe₂O₃: | below 6% by mass; |
| Al₂O₃: | below 3% by mass; |
| SiO₂: | below 35% by mass; |
| MgO: | balance to 100% by mass. |

11. A method of producing a moist unshaped refractory material, comprising the following steps:
A. providing an unshaped refractory material according to at least one of claims 1 to 10;
B. adding water to the unshaped refractory material.

12. The method according to claim 11, wherein 1.0 to 1.9% by mass of water, based on the total mass of refractory base component and the binder component of the unshaped refractory material without the water, is added to the unshaped refractory material.

13. The unshaped refractory material according to at least one of claims 1 to 10, further comprising water.

14. A method of making a refractory lining, comprising the following steps:
A. providing an unshaped refractory material according to claim 13;
B. applying the unshaped refractory material to a surface.

15. The method of claim 14, wherein the unshaped refractory material is applied to a surface of a tundish.

## Patentansprüche

1. Ungeformtes feuerfestes Material, umfassend:
1.1 eine feuerfeste Grundkomponente; und
1.2 eine Bindemittelkomponente; wobei die Bindemittelkomponente umfasst
1.2.1 Zitronensäure; und
1.2.2 Aluminiumsulfat; und wobei
1.3 die feuerfeste Grundkomponente als ein Schüttgut aus Körnern vorliegt, wobei
1.3.1 die Körner eine Feinfraktion von Körnern mit einer Korngröße unter 0,063 mm umfassen, wobei
1.3.1.1 die Feinfraktion in einem Anteil im Bereich von 3 bis 30 Masse-%, bezogen auf die Gesamtmasse der feuerfesten Grundkomponente, vorliegt, und wobei
1.3.1.2 die Feinfraktion CaO in einem Anteil im Bereich von 1,5 bis 10 Masse-%, bezogen auf die Gesamtmasse der Feinfraktion, umfasst.

2. Das ungeformte feuerfeste Material gemäß Anspruch 1, umfassend Zitronensäure in einem Anteil im Bereich von 1,6 bis 6 Masse-%, bezogen auf die Gesamtmasse der feuerfesten Grundkomponente und der Bindemittelkomponente.

3. Das ungeformte feuerfeste Material nach wenigstens einem der vorstehenden Ansprüche, wobei die Zitronensäure als Pulver vorliegt.

4. Das ungeformte feuerfeste Material nach wenigstens einem der vorstehenden Ansprüche, wobei das Aluminiumsulfat in Form von hydratisiertem Aluminiumsulfat vorliegt.

5. Das ungeformte feuerfeste Material nach wenigstens einem der vorstehenden Ansprüche, umfassend Aluminiumsulfat in einem Anteil im Bereich von 1 bis 5 Masse-%, berechnet als hydratisiertes Aluminiumsulfat (Al₂(SO₄)₃ · 14 H₂O) und bezogen auf die Gesamtmasse der feuerfesten Grundkomponente und der Bindemittelkomponente.

6. Das ungeformte feuerfeste Material nach wenigstens einem der vorstehenden Ansprüche, wobei das Aluminiumsulfat als Pulver vorliegt.

7. Das ungeformte feuerfeste Material nach wenigstens einem der vorstehenden Ansprüche, wobei die Feinfraktion die folgenden Oxide in den folgenden Anteilen, jeweils bezogen auf die Gesamtmasse der Feinfraktion, umfasst:
| | |
|---|---|
| CaO: | 1,5 bis 10 Masse-%; |
| Fe₂O₃: | unter 6 Masse-%; |
| Al₂O₃: | unter 3 Masse-%; |
| SiO₂: | unter 7 Masse-%; |
| MgO: | Rest bis 100 Masse-%. |

8. Das ungeformte feuerfeste Material nach wenigstens einem der vorstehenden Ansprüche, wobei die feuerfeste Grundkomponente wenigstens einen der folgenden feuerfesten Rohstoffe umfasst: Magnesia und Olivin.

9. Das ungeformte feuerfeste Material nach Anspruch 8, umfassend Magnesia in einem Anteil von wenigstens 50 Masse-%, bezogen auf die Gesamtmasse der Grundkomponente.

10. Das ungeformte feuerfeste Material nach wenigstens einem der vorstehenden Ansprüche, wobei die feuerfeste Grundkomponente die folgenden Oxide in den folgenden Anteilen, jeweils bezogen auf die Gesamtmasse der feuerfesten Grundkomponente, umfasst:
| | |
|---|---|
| CaO: | 0,5 bis 20 Masse-%; |
| Fe₂O₃: | unter 6 Masse-%; |
| Al₂O₃: | unter 3 Masse-%; |
| SiO₂: | unter 35 Masse-%; |
| MgO: | Rest bis 100 Masse-%. |

11. Verfahren zur Herstellung eines feuchten, ungeformten feuerfesten Materials, umfassend die folgenden Schritte:
A. zur Verfügungstellung eines ungeformten feuerfesten Materials nach wenigstens einem der Ansprüche 1 bis 10;
B. Hinzufügen von Wasser zu dem ungeformten feuerfesten Material.

12. Verfahren nach Anspruch 11, wobei dem ungeformten feuerfesten Material 1,0 bis 1,9 Masse-% Wasser, bezogen auf die Gesamtmasse der feuerfesten Grundkomponente und der Bindemittelkomponente des ungeformten feuerfesten Materials ohne das Wasser, hinzugefügt werden.

13. Das ungeformte feuerfeste Material nach wenigstens einem der Ansprüche 1 bis 10, das ferner Wasser umfasst.

14. Verfahren zur Herstellung einer feuerfesten Auskleidung, umfassend die folgenden Schritte:
A. zur Verfügungstellung eines ungeformten feuerfesten Materials gemäß Anspruch 13;
B. Aufbringen des ungeformten feuerfesten Materials auf eine Oberfläche.

15. Verfahren nach Anspruch 14, wobei das ungeformte feuerfeste Material auf eine Oberfläche eines Zwischenbehälters aufgebracht wird.

## Revendications

1. Matériau réfractaire non façonné comprenant :
1.1 un composant de base réfractaire ; et
1.2 un composant liant ; dans lequel le composant liant comprend
1.2.1 de l'acide citrique ; et
1.2.2 du sulfate d'aluminium ; et dans lequel
1.3 le composant de base réfractaire se présente sous forme d'une masse de grains, dans lequel
1.3.1 les grains comprennent une fraction fine de grains ayant une granulométrie inférieure à 0,063 mm, dans lequel
1.3.1.1 la fraction fine est présente dans une proportion comprise dans la plage de 3 à 30 % en masse, en se basant sur la masse totale du composant de base réfractaire, et dans lequel
1.3.1.2 la fraction fine comprend du CaO dans une proportion comprise dans la plage de 1,5 à 10 % en masse, en se basant sur la masse totale de la fraction fine.

2. Matériau réfractaire non façonné selon la revendication 1, comprenant de l'acide citrique dans une proportion comprise dans la plage de 1,6 à 6 % en masse, en se basant sur la masse totale du composant de base réfractaire et du composant liant.

3. Matériau réfractaire non façonné selon au moins une des revendications précédentes, dans lequel l'acide citrique est présent sous forme de poudre.

4. Matériau réfractaire non façonné selon au moins une des revendications précédentes, dans lequel le sulfate d'aluminium est présent sous forme de sulfate d'aluminium hydraté.

5. Matériau réfractaire non façonné selon au moins une des revendications précédentes, comprenant du sulfate d'aluminium dans une proportion comprise dans la plage de 1 à 5 % en masse, calculée sous forme de sulfate d'aluminium hydraté (Al₂(SO₄)₃ · 14 H₂O) et en se basant sur la masse totale du composant de base réfractaire et du composant liant.

6. Matériau réfractaire non façonné selon au moins une des revendications précédentes, dans lequel le sulfate d'aluminium est présent sous forme de poudre.

7. Matériau réfractaire non façonné selon au moins une des revendications précédentes, dans lequel la fraction fine comprend les oxydes suivants dans les proportions suivantes, chacune se basant sur la masse totale de la fraction fine :
| | |
|---|---|
| CaO : | de 1,5 à 10 % en masse ; |
| Fe₂O₃ : | moins de 6 % en masse ; |
| Al₂O₃ : | moins de 3 % en masse ; |
| SiO₂ : | moins de 7 % en masse ; |
| MgO : | complement jusqu'à 100 % en masse. |

8. Matériau réfractaire non façonné selon au moins une des revendications précédentes, dans lequel le composant de base réfractaire comprend au moins l'une des matières premières réfractaires suivantes : magnésie et olivine.

9. Matériau réfractaire non façonné selon la revendication 8, comprenant de la magnésie dans une proportion d'au moins 50 % en masse, en se basant sur la masse totale du composant de base.

10. Matériau réfractaire non façonné selon au moins une des revendications précédentes, dans lequel le composant de base réfractaire comprend les oxydes suivants dans les proportions suivantes, chacune se basant sur la masse totale du composant de base réfractaire :
| | |
|---|---|
| CaO : | de 0,5 à 20 % en masse ; |
| Fe₂O₃ : | moins de 6 % en masse ; |
| Al₂O₃ : | moins de 3 % en masse ; |
| SiO₂ : | moins de 35 % en masse ; |
| MgO : | complément jusqu'à 100 % en masse. |

11. Procédé de production d'un matériau réfractaire non façonné humide, comprenant les étapes suivantes :
A. fourniture d'un matériau réfractaire non façonné selon au moins une des revendications 1 à 10 ;
B. ajout d'eau au matériau réfractaire non façonné.

12. Procédé selon la revendication 11, dans lequel de 1,0 à 1,9 % en masse d'eau, en se basant sur la masse totale du composant de base réfractaire et du composant liant du matériau réfractaire non façonné sans eau, est ajouté au matériau réfractaire non façonné.

13. Matériau réfractaire non façonné selon au moins une des revendications 1 à 10, comprenant en outre de l'eau.

14. Procédé de fabrication d'un revêtement réfractaire, comprenant les étapes suivantes :
A. fourniture d'un matériau réfractaire non façonné selon la revendication 13 ;
B. application du matériau réfractaire non façonné sur une surface.

15. Procédé selon la revendication 14, dans lequel le matériau réfractaire non façonné est appliqué sur une surface d'un répartiteur.
